# EUROPEAN PATENT SPECIFICATION

(11) **EP 2 666 131 B1**
(45) Date of publication and mention of the grant of the patent: **09.12.2015**
(21) Application number: 12708389.7
(22) Date of filing: 20.01.2012
(51) Int. Cl.: G06Q 20/32, G06Q 20/36, G07F 7/10, H04M 1/725

(54) **METHODS, APPARATUSES AND SYSTEM FOR OBTAINMENT AND/OR USE OF GOODS AND/OR SERVICES IN CONTROLLED WAY**
VERFAHREN, VORRICHTUNGEN UND SYSTEM ZUR HERSTELLUNG UND/ODER VERWENDUNG VON WAREN UND/ODER DIENSTLEISTUNGEN IN KONTROLLIERTER FORM
PROCÉDÉS, APPAREILS ET SYSTÈME DESTINÉS À OBTENIR ET/OU UTILISER DES MARCHANDISES ET/OU DES SERVICES D'UNE MANIÈRE CONTRÔLÉE

(30) Priority: 20.01.2011 US 201161434487 P
(43) Date of publication of application: 27.11.2013
(73) Proprietor: Wolleybuy Limited, Windsor, Berkshire SL4 1BN (GB)
(72) Inventor: Maisto, Luigi, 26900 Lodi (IT); Di Marco, Giuseppe, 26900 Lodi (IT)
(74) Representative: De Ros, Alberto
(86) International application number: PCT/IB2012/050276
(87) International publication number: WO 2012/098525

(56) References cited:
- WO-A1-2005/098769
- US-A1- 2004 030 601
- US-A1- 2007 125 840

## Description

### FIELD OF THE INVENTION

This invention relates to methods, apparatuses and a system for obtainment and/or use of goods and/or services in controlled way.

More specifically, this invention relates to methods, apparatuses and a system for obtain and/or use of goods and/or services via the advance virtual acquisition of credits for goods and/or services on a electronic user apparatus, typically mobile, such as a mobile telephone or similar apparatus; credits will be typically purchased by the user but could also be obtained without payment depending on the specific situation and/or the type of credit.

### BACKGROUND OF THE INVENTION

Different payment methods are available for obtain a good or for the use of a service.

One of these methods envisages the use of a mobile electronic user apparatus (e.g. a standard mobile telephone or smartphone) as an "electronic wallet". This apparatus is associated with a certain amount of money (e.g. via a "pre-charge" using a pre-paid credit card), that can be used to pay for a good or service. Payment can thus take place by associating said user apparatus with a corresponding retailer device, with subsequent deduction of the purchase amount from the available cash balance associated with the user apparatus.

Such a user apparatus is thus used as an alternative payment instrument to cash or other methods of payment such as credit or debit card.

Payment systems via mobile devices are also known in the prior art.

In particular, WO2005/098769 relates to a system and a method for using a mobile device as a device for storing money and for using said money as a contractless payment system. This solution envisages that a mobile device be used has a device to store a sum of money and that the user subsequently use said device as a payment instrument in a contractless payment system, i.e. the mobile device is used as an "electronic wallet" with a specific available cash balance; it must therefore envisage a stage in which said sum of money is linked to the mobile device, by transferring a cash balance from a credit card or a bank current account to an account that is linked to the mobile device.

Further, US2007125840 relates to a system (and a method) for electronic financial transactions includes a sender and a recipient each having an electronic wallet, a sending bank and a receiving bank each having a host application system and an authentication server, and a wallet management center with a host application system and an authentication server. The sender uses its electronic wallet to send an encrypted payment instruction directly to the electronic wallet of the recipient. The recipient can perform a second level encryption of the instruction for submission to the wallet management center for authentication. Once authenticated, the wallet management center notifies the recipient and submits payment instructions for clearing by the corresponding sending and receiving banks. Payment authorization is authenticated directly by the sending bank without involvement of the wallet management center.

Futher, US2004030601 provides a system for facilitating electronic payments in a food service setting using a mobile device is provided. The mobile device interacts with a proximity reader to verify user upon entry into a food establishment and the rest of the transaction such as ordering items and paying for said items is accomplished using messaging.

### SUMMARY OF THE INVENTION

The procedure for obtaining a good and/or using a service is the same as that set out in the solution proposed in the aforementioned document (WO2005/098769), the only difference being the instrument through which the payment is made. There may however be an extended wait time for a customer having a mobile device according to the aforementioned document in a retail business equipped with a system according to the aforementioned document as the transactions to be made are the same as those made when paying by other instruments such as debit or credit card.

In addition, there are basically two "payment" stages for this type of system: a first stage, that envisages the purchase of a sum of money and its association with a mobile device by transferring said sum of money from a current account or credit card to an account associated with the mobile device, and second stage in which said sum is debited from the account linked to the mobile device and transferred to the account of the individual selling the product or service to pay for the product or service.

The general object of this invention is to improve upon the prior art.

A first, more specific, object is to be able to directly obtain a product or use a service via an electronic user apparatus, in particular, without financial transactions and with a limited number of other apparatus or individuals involved in said obtainment and/or use.

A second, more specific, object is to speed up the process for obtain a product or using of a service, by eliminating payment wait-times, particularly for consumer goods or services (and typically those of limited value), which in the current state of the art and particularly at peak times, envisage a large number of people waiting in a queue to pay.

A third, more specific object is to allow services to be used even in places where no sales points for their purchase are available, e.g. a train ticket when the ticket office is closed and/or when there are no vending machines or these vending machines are out of order.

A fourth, more specific, object is to digitalise paper instruments for the use of services, e.g. public transport tickets.

A fifth, more specific, object is to have a single purchase stage for a plurality of goods and/or services, which can then be freely and securely obtained and/or used (i.e. without any risk of fraud on part of either the user or the provider).

Yet another object is to guarantee the same or greater reliability of existing, operational solutions as well as simple and economical system development. These and other objects are achieved due to the methods, apparatuses and the system having the features as set out in the accompanying claims, which are an integral part of this description.

The idea behind this invention is to provide an electronic user apparatus, for example and typically a mobile device such as a standard mobile telephone or smartphone, in which pre-purchased credits are stored, for the purchase of goods and/or services and the relevant uses as and when there are obtained and/or used. In particular, according to the present invention, the electronic user apparatus comprises first memory means configured to store at least a series of credit codes corresponding to credits for the obtainment and/or use of goods and/or services, and a corresponding series of usage codes corresponding to the use of said credits. Said apparatus further comprises second memory means that store a program adapted to manage said credit codes and said usage codes, a processor connected to said first and second sets of memory device for the execution of said program. Said device is of the type comprising a data communication device for proximity communications, in particular NFC type, connected to said first and second memory means and to said processor. Said program comprises code that when executed by said processor generates a usage code and stores it in said first memory means in view of a data reading from a service apparatus via said data communication device.

The storage and retention of the codes clearly takes place in a safe and reliable manner and may thus be checked at any time.

### LIST OF DRAWINGS

The technical features of this invention and its benefits shall become apparent from the below description to be considered alongside the accompanying drawings, wherein:
Fig. 1 show schematically and partially one embodiment of a system according to the present invention,
Fig. 2 shows data used in the system components of Fig.1,
Fig. 3 show a block diagram of a software component of one embodiment of the present invention.
Fig. 4 shows a flow chart relating to possible actions that a user carries out during the usage of a user apparatus according to the present invention,
Fig. 5 shows a flow chart relating to first possible actions that a user carries out during credits purchasing process to obtain or use of a good or service according to the present invention,
Fig. 6 shows a flow chart relating to second possible actions that a user carry out during credits purchasing process to obtain or use of a good or service according to the present invention,
Fig. 7 shows a flow chart relating to a possible logical sequence for the preparation of communications according to the present invention,
Fig. 8 shows a block diagram of one possible structure of a transaction confirmation message according to the present invention, and
Fig. 9 shows a flow chart relating to a possible management of an SMS by a user apparatus according to the present invention.

### DETAILED DESCRIPTION

Both said description and said drawings are to be merely considered for illustrative purpose and are not exhaustive; this invention may therefore be implemented according to other and different embodiments as claimed; furthermore, it must be taken into account that said figures provide schematic and simplified views.

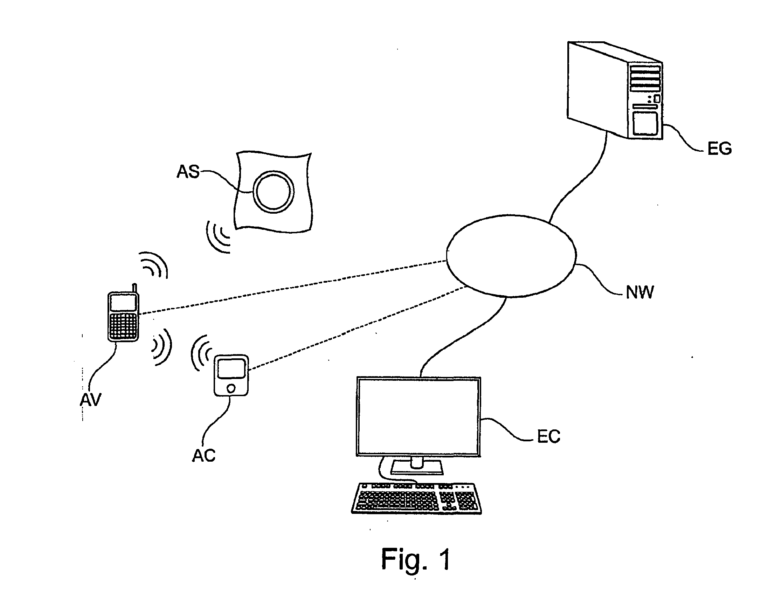

Fig. 1 shows a system according to this invention, wherein a plurality of apparatus and processors are linked via their respective means of communication, some of which have been loaded with a program to control the obtainment and/or use of said goods and/or services, as will become clearer from the rest of the description. In particular, Fig. 1 schematically illustrates:
- an electronic device AU (hereinafter also referred to as mobile device AU), typically a smartphone or a standard mobile telephone available to a user subscribing to the service (it is the complete service provided thanks to the present invention), equipped with first memory means that are configured to store a series of credit codes corresponding to credits for the obtainment and/or use of goods and/or services and with a corresponding series of usage codes corresponding to the use of said credit codes and a series of pseudo-random codes for the generation of said usage codes, with telephone means that allow connection to the mobile network and/or Internet network, with second memory means which have been loaded with a program for the management of said credit codes and with a data communication device for proximity communications, in particular NFC type.
- an electronic service apparatus AS, typically an NFC tag, located in the premises of the retail business in which the user obtains a product or in the place in which said user uses a service, which comprises a data communication device for proximity communications of NFC type and memory means to store a product and/or service code.
- an electronic control apparatus AC, typically a smartphone or PDA used by a controller to check that the credit codes are used correctly by a user, which comprises memory means onto which a program adapted to manage the credit codes and the relevant usage codes for the obtainment of goods and/or services stored in a mobile device AU, has been loaded, a data communication device for proximity communications of NFC type and communication means to communicate via a public communications network, in particular Internet.
- a control computer EC typically a computer, a tablet PC or a bank POS (suitably modified) available to a retailer subscribing to the service, comprising communication means for communication via a public communications network, in particular Internet, and memory means onto which a program to control the obtainment and/or use of goods and/or services has been loaded.
- a computer EG, typically a server available to the service manager (is the complete service provided thanks to the present invention), comprising communication means for communication via a public communication network, in particular Internet, first memory means to store, for each user subscribing to the service, a series of credited codes corresponding to credits for obtaining and/or using the goods and/or services and a corresponding series of usage codes corresponding to the use of said credits, second memory means onto which a program for the management of said credit and usage codes has been loaded.

Fig. 1 also illustrates a public communications network NW, in particular Internet, to allow certain devices and processors (AU, AC and EC in particular) to communicate with the computer (EG). Said Network NW can, nevertheless, also be used for communications that do not exclusively take place via network connectivity, but that also take place via other means. Indeed, the apparatus AU and the control apparatus AC will be able to communicate with the management computer EG by sending and receiving SMS. Namely, in general SMS may be used to implement communications between the devices and/or the processors according to this invention, through the network NW.

Of all the communications that the various described apparatuses and computers may carry out, those envisaged for the purposes of the present invention are those wherein: the mobile device AU communicates with the management computer EG via the Internet network NW, the mobile device AU being a mobile telephone or a smartphone; Internet network NW connection will typically take place via a wireless connection, in particular via data connection in a mobile phone network. In addition, the mobile device AU also communicates with the NFC tag located in the business premises in which a product is obtained or in the place in which a service is used, said communication taking place via the respective NFC devices when the mobile device AU and the NFC tag are at a distance that is lesser or equal to around 10 cm for example, said communication being typically asymmetrical, indeed when an interrogation signal is sent by the mobile device AU the NFC tag sends data such as a good and/or service code or similar information. The mobile device AU also communicates with the respective NFC device that is integrated in the electronic control apparatus AC via data communication through the NFC device itself; said communication is also asymmetric, indeed when an interrogation signal is received from the apparatus AC, the mobile device AU sends data relating to a good and/or service that has been obtained and/or used.

In addition to communicating with the mobile device AU as previously described, the electronic control apparatus AC also communicates with the management computer EG. The apparatus AC is also a mobile device (typically a smartphone or a PDA), therefore communication between said device and the management computer EG via the Internet network NW is the same type of communication as the communication between the mobile device AU and the management computer EG.

The control computer EC connects to the management computer EG via the Internet network NW. The control computer EP typically being a computer or a tablet PC, said connection will take place via landline data connection.

The mobile device AU, the apparatus AC and the computer EC transmit data to the management computer EG, the integrity and security of which must be preserved. It is therefore envisaged that the data transmitted by said devices be encoded, e.g. by applying protocols such as TLS or SSL protocols (according to different embodiments said encrypting could also be avoided or simplified or carried out in a different way).

It should be noted that in Fig. 1 each apparatus and each computer is shown as a single unit. It can be easily understood that this is a schematic view and is not representative of the actual number of devices used during actual use of the system. Indeed there will typically be a plurality of mobile devices AU, generally one for each service user; a plurality of electronic control apparatuses, in particular one serving each controller checking that the system in used correctly by the users; a multitude of NFC tags, in particular one in a plurality of retail business premises or places in which a service is offered; a plurality of control computers EC, each serving a plurality of retail businesses subscribing to the service.

The description makes reference to a user subscribing to the service, to a retailer subscribing to the service and to a service manager.

"User subscribing to the service" refers, for example, to a user who intends to use the service for the obtainment and/or use of goods and/or services via a mobile device AU in his/her possession and who has thus set up an account or has registered his/her details (namely: name, surname, tax I.D., and so forth) and has associated payment information such as credit card of bank current account to said account.

"Retailer subscribing to the service" refers, for example, to a retail business or a service company that intends to allow users subscribing to the service to use the goods and/or services that is has on offer by the methods envisaged by this invention, equipping itself with at least one NFC tag, a control computer and a list of goods and/or services to allow the obtainment and/or use.

"Service manager" refers to the person that makes the system according to this invention available to the users subscribing to the service and to the retailers subscribing to the service.

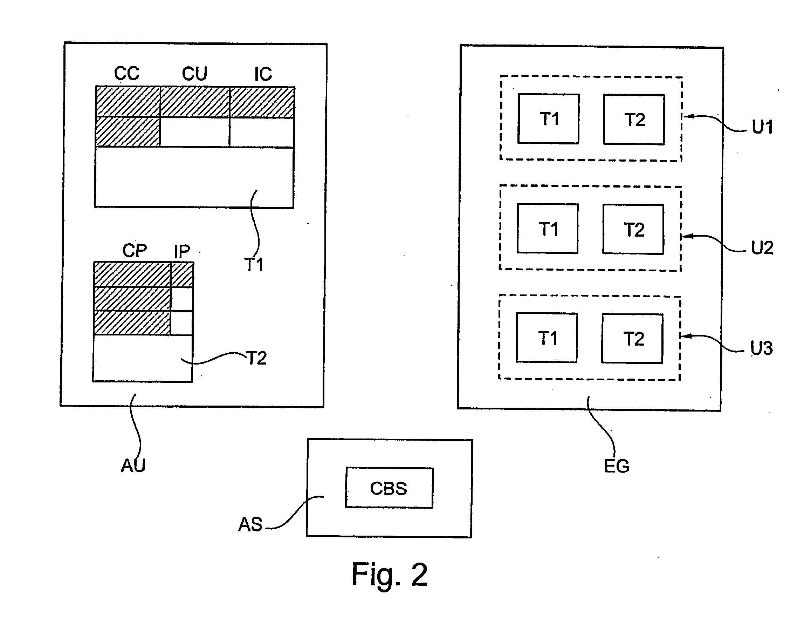

Thus, in one stage of use of the system, a user may purchase credits for the obtainment and/or use of goods and/or services, while paying for them, for example, by means of a selected payment instrument that is linked to his/her account (e.g. by credit card). Said credits are stored in the memory devices of the electronic user apparatus AU in the form of a series of credit codes, as will become clearer in the rest of the description, in particular with reference to figure 2. Said user may thus procure and/or use the goods and/or service by using the pre-paid credits. For example, a user may purchase 10 credits, each valid for the purposes of purchasing a newspaper.

Therefore, the selection, payment and purchase stages for a good and or service are advantageously concentrated into a single transaction and a single instrument such as the mobile device AU; the user will subsequently only have to obtain the product (e.g. receive the newspaper for which multiple credits had been previously purchased) or use a service (e.g. use a means of public transport).

For the purposes of this description, a purchase shall be deemed as meaning a product and/or service in respect of which the relevant credits for its obtainment and/or use have been purchased and have been stored in the memory of the electronic user apparatus AU and of the management computer EG.

Thus, the purchase stage for a product or service will be followed by a stage carried out by the user to obtainment and/or use thereof.

In order to procure said product or use said service the user will place his/her mobile device AU in proximity of the electronic service apparatus AS being thus able to procure the pre-purchased product or receive a "confirmation receipt" relating to the correct use of the service, e.g. by marking as used a public transport ticked that is being used.

In order that the system according to this invention and its components (in particular the electronic user apparatuses AU, the electronic service apparatuses AS, the electronic control apparatuses AC, the control computer EC and the computer EG) may fulfil the controlled obtainment of goods and/or use of services on the part of users, said components must generally be equipped with suitable processing programs and suitable data must be loaded and managed within said programs; both the programs and the data are dependant on the component and on the manner in which this invention is implemented.

The following relates to the embodiment illustrated in Fig. 1 and will be better understood by referring to Fig. 2.

Each of the electronic user apparatuses AU stores the below data in particular:
- credit codes CC corresponding to credits for the obtainment and/or use of services
- usage credits CU corresponding to the use of credits
- check indicators IC for the use of credits
- pseudo-random codes CP
- use indicators IP corresponding to pseudo-random codes
CC codes, CU codes and IC indicators are organised in a first table T1 that contains a row for each credit available to the user of the apparatus AU. In general, each user (or rather each user apparatus) will have different credits. The presence of a credit in the device AU may derive, for example and fairly typically, from a purchase made by the user (in this event, it is a "pre-paid" credit, for example a credit resulting from the purchase of a bus ticket); alternatively, the credit resulting from a gift and a voucher (in this event, the user has not made any payment to obtain the credit); it should be noted that the value of the credit may not exactly correspond to the value of a product or service (in this event it is a "discount" credit for the obtainment of that specific product and/or use of that specific service). According to a typical embodiment of this invention (albeit not the only possible embodiment), the device AU receives the credit codes CC from the computer EG itself (or from another computer to which this function has been transferred).

When the use legitimately and correctly uses one of the credits stored in the electronic user apparatus AU, a related credit code CC is identified, then a usage code CU is generated and stored in the cell of the row corresponding to the identified credit code CC in the table T1; lastly, a check indicator IC is obtained from the management computer EG (if there is a connection between the device AU and the computer EG, as should occur under normal conditions) and is stored

in the cell of the row corresponding to the identified credit code CC in the table T1. Thus the table T1 will show that the credit has been used by the user and that the use is legitimate; said information may thus be subsequently read during checks for the legitimate use of the credits. The check indicator IC can be a simple "flag" (i.e. a bit or a byte); alternatively, it could be more complex information, e.g. a code that is digitally signed by the computer EG so that it may not be generated by the device AU.

CP codes and IP indicators are organised in a second table T2 that contains a row for each pseudo-random code available to the user of the device AU. Each user (or rather each user apparatus) will have different pseudo-random codes. The presence of pseudo-random codes in the device AU results from the fact that its user has subscribed to the service offered by the computer EG and has thus typically received said codes directly from the computer EG (or from another processor to which this function has been transferred). The pseudo-random code CP are used by the device AU to generate the CU codes relating to the available credits; each CP code is used once only to generate a single CU code; in this way,

it is virtually impossible for a device AU to generate a valid CU code in the absence of genuine CC codes and genuine CP codes. As the device AU used the CP codes these are marked as used in the table T2 through the corresponding usage indicator IP; the indicator IP is typically a simple "flag"; it can thus be ensured that the CP code are used only once.

It is clear from the foregoing that there is no numerical correspondence between the series of codes CC and the series of codes CP; in particular, the codes CC increase when the user purchases new credits and the codes CP increase when the computer EG (or other processor to which this function has been transferred) sends them to the device AU. CP codes can be transmitted, for example, on the request of the device AU: initially, the device AU receives a certain set of codes CP (e.g. 100), which it uses one by one to use up the credits, then it requests a new set (e.g. a further 100).

The information content of the usage codes CU depends on the embodiment of the present invention and may be more or less complex; in a first case, a code CU corresponds to a code CP; in a second case, a code CU corresponds to the combination of a CC code and a CP code; in a third case, a code CU corresponds to the combination of a code CC, a code CP and time and/or date and/or geographic location information (e.g. of the user apparatus AU and/or of the service apparatus AS) relating to when the code itself is generated; it is advantageous for the code CU specifies information relating to the identity of the user and/or of the electronic user apparatus (this facilitates computer EG checks); many other cases are possible.

Fig. 2 illustrates memory areas dedicated to table T1 and table T2; table T1 contains two stored CC codes but only one of the two codes has been used (i.e. it is linked to a stored CU code and to a stored IC indicator); table T2 contains three stored CP codes but only one of the three codes has been used (or rather it is associated to a stored IP indicator).

The computer EG stores data that is at least similar or identical to the data stored in the electronic user apparatuses AU.

In the example herein described, for each user that has subscribed to the service offered by the management computer EG, the computer EG stores the tables T1 and T2 and the system ensures that the tables in the computer EG contain the same data as the tables in the device AU; any differences will be over the short-term (e.g. for 10mS to 1S) due to delays in the processing and communications times, or over a longer time period (e.g. 10S to 1000S) due to availability issues affecting the communications systems (e.g. absence of GSM or UMTS coverage and/or absence of internet network connectivity). At worst, for example, the data contained in the tables of the computer EG will be aligned with the data contained in the tables of the apparatus AU when said apparatus again has GSM or UMTS coverage and/or again has access thereto and/or there is Internet network connectivity.

The computer EG thus stores the following data for each user:
- credit codes CC corresponding to credits for the obtainment and/or use of services
- usage credits CU corresponding to the use of credits
- check indicators IC for the use of credits
- pseudo-random codes CP
- use indicators IP corresponding to pseudo-random codes Codes CC, codes CU and IC indicators are organised in a first table T1.

CP codes and IP indicators are organised in a second table T2.

Fig. 2 refers to the case in which there are three users U1, U2 and U3; the computer EG thus stores the tables T1, T2 and T3 relating to said three users, in other words the tables corresponding to the devices AU of said three users.

The data stored in the computer EG allow the legitimate use of the credit codes by the users to be checked.

It should be noted that, according to certain embodiments of this invention, even if the computer EG is inactive or inaccessible, checks can be carried out on a user apparatus AU even only on the basis of data stored in the device itself.

As previously mentioned, a group (more or less large) of electronic service apparatuses AS must be envisaged.

Said apparatuses store very little data: typically only a good or service code CBS to be transmitted (via proximity communication) to the electronic user apparatuses AU that come into proximity (typically, for example, a few millimetres or, at most, a few centimetres) and that therefore wish to procure a product or use a service.

In addition to containing an identifier that specifies the product or service (e.g. "a coffee" or "a bus transfer") the goods or service code CBS may also for instance contain an identifier that specifies who is providing the goods or service (e.g. a bar identifier or a bus identifier).

There must be a relationship between the goods or service codes CBS and the credit codes CC; indeed, when a user apparatus AU receives a good or service code from a service apparatus AS, it must be able to check, on the basis of what it has received, whether or not there is a credit available for this product or service.

A typical possibility consists of envisaging that both the code CBS and the code CC contain a common identifier when relating to the same product or service. According to this possibility, when a user apparatus AU receives a code CBS from an apparatus AS, it extracts from it said product or service identifier and searches the CC codes stored in its memory for at least once which contains the same identifier; if said search is successful, the located credit is used. It is also possible to envisage that, in the event of this search being unsuccessful, the device AU signals to alert the user of insufficient credit and gives him/her the possibility of purchasing one or more credits for that specific product or service, e.g. via Internet purchase.

The electronic control apparatuses AC and the control computer EC do not store any of the aforementioned data on a permanent basis but allow checks to be carried out on the basis of the data stored in the devices AU and/or the computer EG.

It is worth clarifying that while the apparatuses AC allow the timely checking of an individual device AU, typically in relation to a specific product or (more frequently) service (e.g. bus ticked, parking ticket and so forth), the computers EC are designed to carry out collaborative monitoring activity (continuous or repetitive) with the computer EG.

The system components illustrated in Fig. 1 (in particular the electronic user apparatuses AU, the electronic service apparatus AS, the electronic control apparatuses AC, the control computer EC and the management computer EG) fulfil the controlled obtainment of goods and/or the use of services on the part of users, while also performing certain activities under the control of programs.

A series of methods that are generically described hereunder can thus be identified; on of these will be primarily followed and executed by the devices AU, one of which shall primarily be followed and executed by the apparatuses AC, one of which shall be primarily followed and executed by the computer EC (where present), and one of which shall be primarily followed and executed by the computer EG; such methods are clearly linked one to the other.

A method for the obtainment and/or use of goods and/or services envisages that an electronic user apparatus AU be placed in proximity of an electronic service apparatus AS and the electronic user apparatus AU performs the following stages:
A) receives a product and/or service code CBS from the electronic service apparatus AS,
B) associates the goods and/or service code CBS received to a stored credit code CC,
C) generates a usage code CU corresponding to said credit code CC,
D) stores the usage code CU generated.
   In addition, the electronic user apparatus AU performs the following stage:
E) transmits the credit code CC and the corresponding usage code CU to the computer EG.
   Lastly, the electronic user apparatus AU performs the following stage:
F) waits for, receives and possibly stores a check indicator IC from the computer EG.

The electronic user apparatus AU receives the credit codes CC, in particular from a public communications network, and stores them internally; said purchase generally takes place following an Internet purchase.

The receipt of one or more credit codes CC can take place before said stage A; in this event, the device AU already has a credit for the user's desired product or service. The receipt of one or more credit codes CC can take place during said stage B; in this event the device AU is aware that it does not have a credit for the user's desired product or service (the association in stage B has not been successful) and therefore a process relating to the purchase of a suitable credit begins.

A method for checking the obtainment and/or use of goods and/or services on by an electronic user apparatus AU via an electronic control apparatus AC comprising the following stages:
G) the electronic control apparatus AC identifies a product or service to be checked (a device may be designed to check just one good or service - e.g. a standard device supplied to those checking bus or parking tickets; it is therefore a predetermined good or service),
H) the electronic control apparatus AC transmits information relating to said identified product or service (e.g. a code GSC or a similar code) to the electronic user apparatus AU,
I-1) the electronic user apparatus AU transmits to the electronic control apparatus AC a check indicator IC or a credit code CC with relevant usage code CU corresponding to said good or service,
   in dual mode it can be said that
I-1) the electronic control apparatus AC waits for and receives from the electronic user apparatus AU a check indicator IC or a credit code CC with relevant usage code CU corresponding to said product or service,
L) the electronic control apparatus AC checks if said check indicator IC or said credit code CC with relevant usage code CU is correct.
   If the computer EG is active and available, the method may also advantageously envisage the following stages:
M) the electronic control apparatus AC transmits the credit code CC with relevant usage code CU to the computer EG,
N-1) the computer EG transmits to the electronic control apparatus AC a check indicator IC corresponding to said credit code CC with relevant usage code CU, in dual mode it can be said that
N-2) the electronic control apparatus AC waits for and receives from the computer EG a check indicator IC corresponding to said credit code CC with relevant usage code CU,
O) the electronic control apparatus AC checks if the check indicator IC is correct. Stage L or stage O can also be carried out on the basis of time and/or date information; this is useful, for example, for time-based services such as buses and parking.

According to one embodiment of this invention, credit codes CC can be purchased by selecting them from one or more catalogues. For instance, said catalogues, can be made available by a retailer subscribing to the service that issues them, via Internet in particular, to users subscribing to the service, and can include a plurality of goods and/or services that correspond to a plurality of purchasable credit codes. There are also other methods through which a user can obtain or consult said catalogues. A user can in fact consult catalogues on a website or on an computer EG. In addition, the computer EG can sent these to one or more users or make them available for consultation, through a web interface that can be envisaged in the computer EG, for example.

A user can therefore decide which goods and/or services to purchase by consulting the catalogue and retrieving the corresponding credit codes, which will then be stored in his/her mobile device AU. He/she will be subsequently, or even immediately, able to use the credit thus purchased.

According to a further embodiment, it may be envisaged that, a user subscribing to the service with a mobile device AU which integrates a positioning device (using in particular a cellular antenna or a GPS antenna), may receive catalogues or use the credits selectively on the basis of the position information obtained by said devices. Said position information can be transmitted by a user's mobile device AU to the computer EG, which will in turn be able to communicate said information to those retailers subscribing to the service who are, for example, located in proximity of the user's position.

For example, the retailers may therefore send catalogues for the purchase of goods and/or services to one or more users on the basis of the position information received. The computer EG itself may also or alternatively send said catalogues to the users when it is in possession of the relevant position information.

If the device AU integrates a positioning device, it may be envisaged that a proposal for the purchase of credits corresponding to the obtainment of goods or the use of services in specific retail businesses or in specific locations be sent to one or more users. For example, the acquisition of credits for the purchase of 10 coffees in a specific bar that is part of a chain, may be proposed. The program loaded on the mobile user apparatus AU may therefore envisage that said credits only be used when said user is in proximity or in the specific bar, and not in another bar that is part of the chain. In order to ensure that a user uses a credit code in a specific place, it may envisage the entering of position information acquired via the positioning devices of the mobile device AU, within the same field that contains the usage code CU. In this way said information can be checked in a similar way to that which has been previously described. This is to say that stage L or stage O can be carried out both on the basis of time and/or date information and on the basis of position information.

### EMBODIMENTS OF THE PRESENT INVENTION

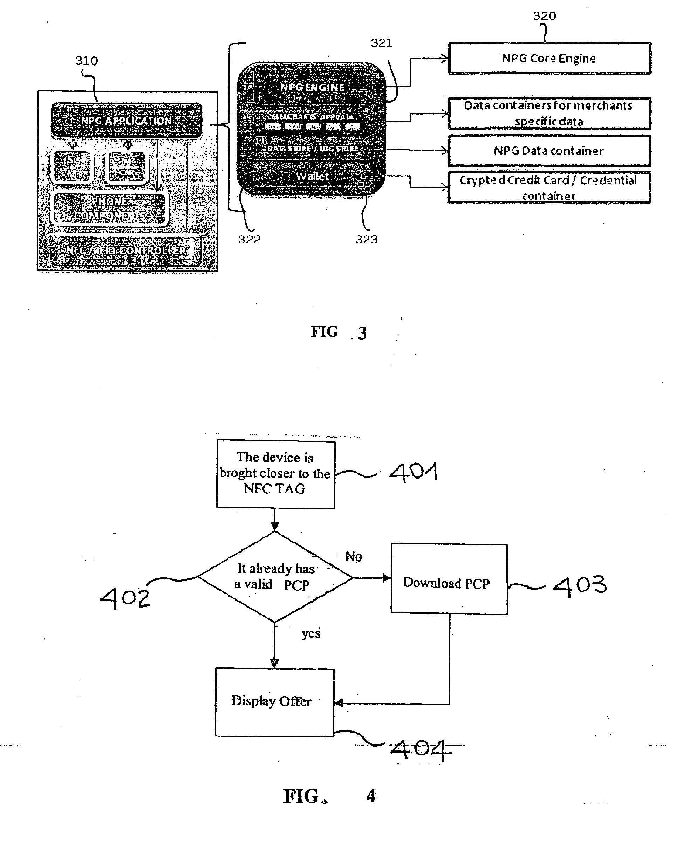

Figure 3 illustrates a specific diagram of one embodiment according to the present invention, which highlights the loaded software component (hereinafter referred to as NPG 301 application) executed on enabled NFC AU mobile devices that are part of an electronic system according to this invention. Said software is the engine that allows individual AU devices to use the system managed services. In particular, it allows:
- Consultation of the catalogue of goods and services offered by the various Merchants
- Purchase of the goods and services on offer
- Secure storage of the goods and services purchased
- User receipt and use of offers and coupons

More specifically, the electronic system according to the invention allows the sale, purchase and management of goods and services via mobile AU equipped with NFC (Near Field Communication) technology. It is a simple, quick and secure service managed by a central structure EG, which controls transactions between Retailers or Service Providers and Users subscribing to the system.

In particular, the system according to this specific embodiment allows any Retailer of Service Provided, via effective and low-cost operations, to:
- Publish its offer
- Sell the goods or the services offered, particularly via pre-paid transactions (both in dematerialised form, such as travel tickets and physical form, such as newspapers)
- Diffuse promotional initiatives

It allows Users to:
- Access each Vendor's offer
- Consult the catalogue of goods and services offered by each vendor
- Purchase the goods and services on offer, particularly via pre-payment and concessionary methods
- Securely use and/or store the goods and services purchased or received from other customers on the mobile device
- Subscribe to the promotional initiatives of the Service Providers
- Transfer the goods, services or cash to other system Users

As regards the embodiment illustrated in figure 3, the following terms shall have the following meanings:
NPG (Network Payment Gateway): Consortium system, for example created via the management computer EG, for the centralised management of payments from mobile devices AU.

NPG Engine 320: Basic software component loaded onto the mobile devices AU, which allows payment of the goods via interaction with the service centre PCP (Products Catalog Plugin), in particular acquiring credits by selecting them from said PCP: Software component that contains the goods and services offer, this component automatically integrates with the NPG Engine 320.
Merchant: Manufacturer of goods and services subscribing to the system
Retailer: sales point subscribing to the system from which the Merchant's goods and services can be purchased.

In addition, figure 3 also illustrates the logical components of the embodiment of an NPG application as set out below:
- NPG Core Engine 320
- Merchants Appdata 321
   1. Basic PCP or Full PCP
- Data Store - Log Store (Transaction history) 322
- Wallet 323: encrypted store for the payment information and purchased product store, e.g. for credit codes CC
   1. User ID
   2. Safety keys
   3. Store

The data structure used for the PCP in the embodiment illustrated in figure 3 is as follows:
Retailer data and product list
Retailer classification data must contain:
   - Retailer ID
   - Retailer Name
   - URL Logo
The product list must contain:
   - ID
   - Name
   - Description (opt.)
   - Unit price
   - Minimum quantity
   - Purchase end-date
   - Set features

In addition, the xml code for Merchant Data according to the embodiment illustrated in the example, can be as follows

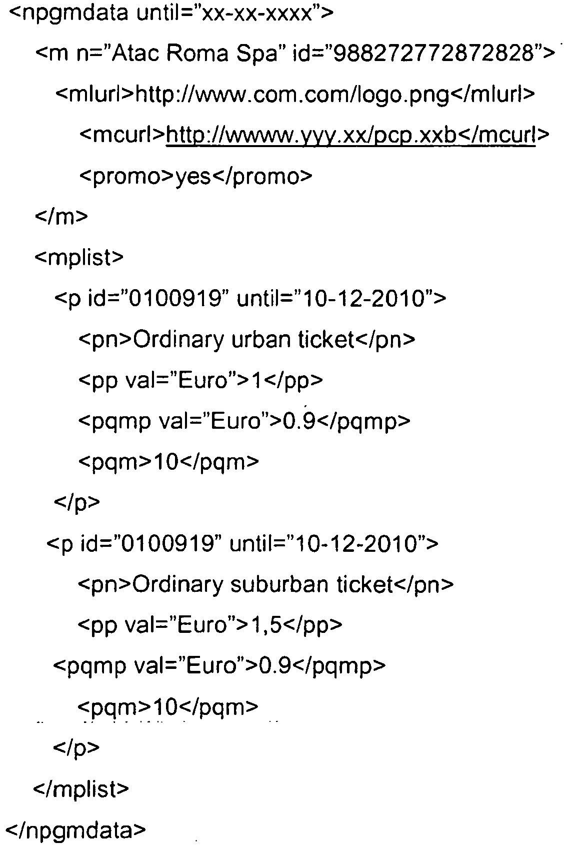

Messages for receipt of tickets/vouchers from third parties

Said messages, in SMS format, for coupons, tickets/vouchers information, etc., can be of the following type
[id merchant][msg]
[msg] : text, productid/quantity/until/frequency of use
or
text, productid/quantity(absolute or %)/until/frequency of use

Basic data, represented as follows:
1. Retailer ID 6 char [letter][5 digits]
2. Product ID: 2 digits (incl. loyalty card)
3. Currency: 3
4. Quantity: 3 digits
5. Daily use frequency: 1 digit
6. Cumulability: 1 digit
7. Discount: 4 digits
8. Until: validity expiry date
9. Text (missing characters up to 160)
Information Contained in the Basic PCP
1. List of products and services
2. Unit price
3. Validity date
4. References (url) for downloading the full version of the PCP (Full PCP)
5. Retailer ID

Interaction for the loading of the Basic PCP in the mobile device with NPG

Figure 4 show a flow chart relating to possible actions that a user carries out during the usage of a user apparatus according to the present invention, in particular interaction between the mobile device and the NFC tag.
1. The mobile device is brought into proximity with the NFC tag, as shown in box 401
2. Checks are conducted to ensure that the PCP of the mobile device is offered and valid, as shown in test box 402
3. If the answer to step 402 is no, branch No then leads to box 403 in which the PCP is transferred from the TAG to the mobile device
4. If the answer to step 402 is yes, then branch Yes leads to box 404, which displays the offer.

Once downloaded the Basic PCP is immediately available for consultation from the NPG application menu contained in the device

### Loading of the Full PCP

This embodiment presents one aspect for loading the Full PCP; as indicated in the Basic PCP, a URL where the Full version of the PCP can be downloaded may be specified. This function is available in the basic NPG, NPG Engine software and allows via the viewing of a special menu item. The menu item is only displayed if the retailer has indicated the availability of a Full PCP; the order of the transactions can be as follows:
1. View Basic PCP
2. Select download Full PCP from relevant menu item
3. Download Full PCP and view full offer

### Expiry of PCP validity

A further aspect of this invention envisages that the NPG Engine automatically issue a renewal invitation when the PCP validity period has expired. This can take place in three different ways:
1. By bringing the mobile device closer to an NFC TAG containing the updated Basic PCP (possibly replacing the Basic PCP with Full PCP).
2. By downloading the new version of the Full PCP
3. Via Internet and PC

### Further aspects of this embodiment envisage

### Viewing of the offer

The list of goods offered is presented on the screen of the mobile device with a numbered list.The product can be selected in two ways:
1. By entering the number corresponding to the product on the list on the keyboard of the device
2. By scrolling down the list and selecting the product

If the PCP contains only one offered good or the information received by the tag pre-determines the choice, the purchase of the product is immediately proposed.

### Pre-determination of automatic purchase limits:

In this specific embodiment, the NPG application has a function that allows the pre-determination of automatic spending limits. This allows payment of the product without any interaction between the user and the device when the cost of the product or service is below the pre-defined limit.

Automatic spending limits can be managed through a level 2 password.

Goods and services stored in the mobile device

The NPG application has an encrypted store that contains the residual inventory of purchased goods and services, i.e. the credit codes CC; a typical example is the purchase of a "book" of travel tickets. Goods and services are automatically collected from the store, until stocks run out.

The user can automatically view the residual inventory of goods or services whenever the goods or services are available, and can specifically access the store function and view the residual goods.

### Purchase process

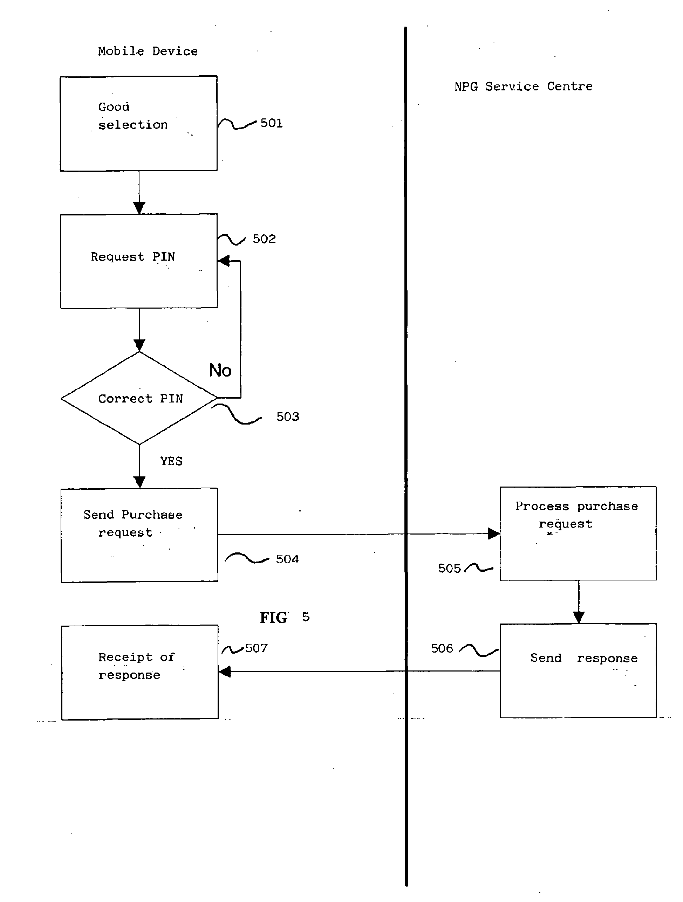

Figure 5 show a flow chart relating to possible actions that a user carries out during credits purchasing process to obtain or use of a good or service according to one embodiment of the system object of the present invention.

A user's choice of product or service made via his/her mobile device as shown in box 501, requires that a PIN be entered as shown in box 502. After step 502 comes a test as shown in box 503: if this is incorrect, branch No leads back to box 502 where the PIN must again be entered; if this is correct, branch Yes leads to box 504, which shows the transmission of a user purchase request. This action leads to processing of the purchase request by the NPG service centre (e.g. by the computer EG), as shown in box 505. The outcome of this stage leads to the transmission of a service centre response, as shown in box 506. Said response is subsequently received by the user's mobile device, as shown in box 507.

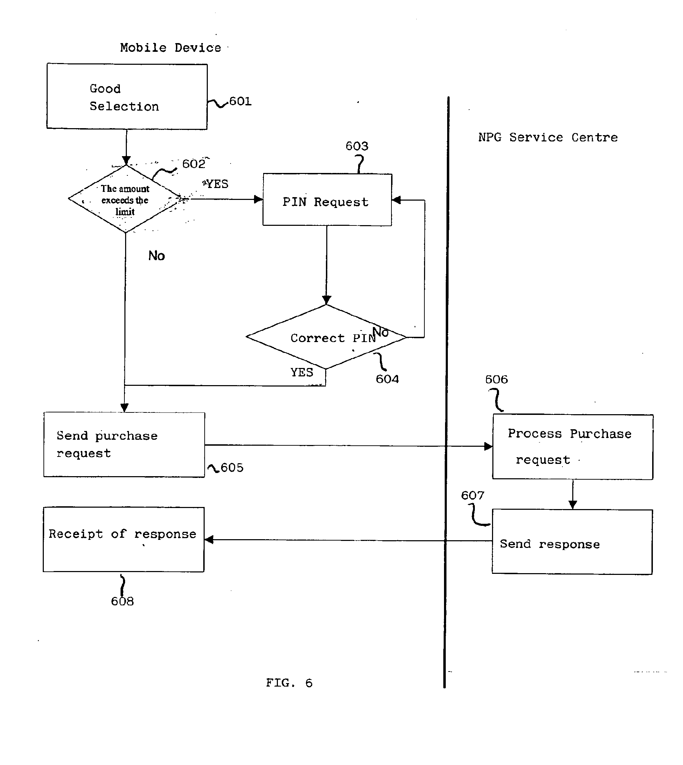

A further aspect of this invention envisages the setting of an automatic purchase limit thus the user's possible actions when purchasing a product are shown in the flow chart in fig. 6, wherein: the choice of product or service made by a user via his/her mobile device as shown in box 601, requires verification relating to the fact that the price of said good must not exceed a certain amount that has been set as the limit, as shown in test box 602. In the event of a positive outcome, branch Yes leads to the entering of a PIN, as shown in box 603. A test is envisaged after step 603 as shown in box 604. If it is incorrect, branch No leads back to box 603 where the PIN must again be entered; if this is correct, branch Yes leads to box 605, which shows the transmission of a user purchase request. This action leads to processing of the purchase request by the NPG service centre (e.g. by the computer EG), as shown in box 606. The outcome of this stage leads to the transmission of a service centre response, as shown in box 607. Said response is then received by the user's mobile device, as shown in box 608.

### Service subscription

The types of service subscriptions available to the various parties involved in the system as envisaged by one specific embodiment of this invention are described below.

### Purchaser service subscription

Users can subscribe to the service as follows:
1. By purchasing an NFC-enabled microSD containing the NPW Engine sw.
2. By downloading the NPG Engine from the internet (if the mobile drives already has NFC)

In both cases, subscription contracts are simultaneously entered into.

### Retailer service subscription

Individual retailers have the option of subscribing to the service and preparing their Basic PCP via a guided internet procedure. The NPG Service Centre will transmit NFC labels with the Basic PCP prepared by the retailer.

### Mobile device and NPG service centre interactions

Interactions between the mobile device, e.g. the AU apparatus, and the SprayMoney service centre, e.g. the computer EG, takes place via SMS messages that are used as a means of implementing communication. The logical sequence of necessary actions for preparing the interaction is indicated below:

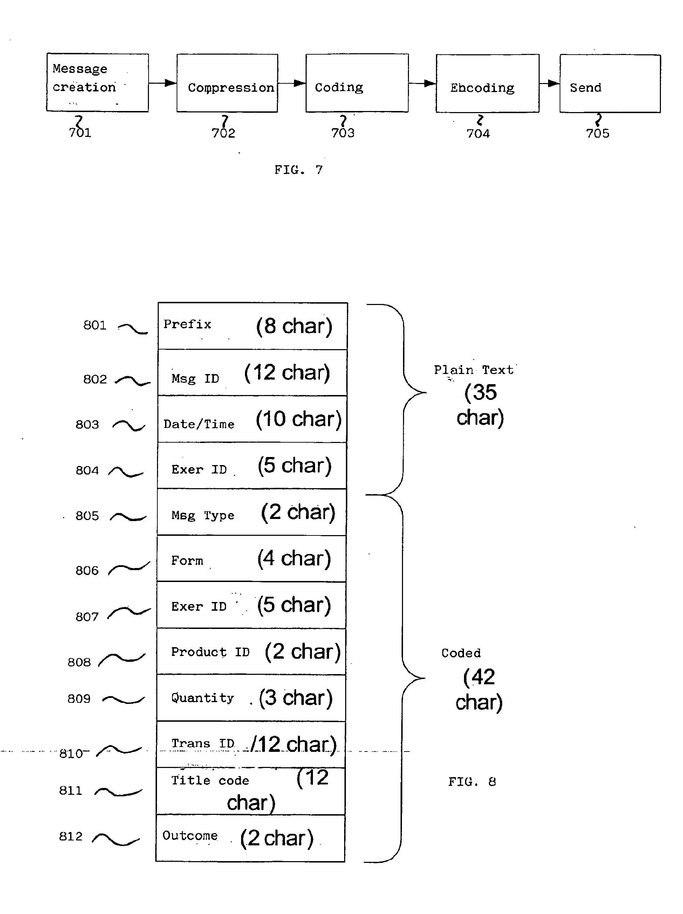

Figure 7 is a block diagram which expresses the logical sequence for the preparation of communications.
   1. Creation of a response message with random template as shown in box 701
   2. Compression of the message as shown in box 702
   3. Encryption as shown in box 703
   4. Encoding (e.g. 64-bit encoding) as shown in box 704
   5. Transmission as shown in box 705

The maximum size of the message ready to be transmitted is 140 bytes (160 7-bit char).

The SMS message must allow individual merchants to distribute the new product offer or existing product basket offer

### Structure of the messages transmitted to the mobile device

The structure of a transaction confirmation message according to a specific embodiment can be as shown in figure 8, wherein:
- 801: Plaintext recognition prefix (8 char)
- 802: Plaintext ID transmission (12 char)
- 803: Plaintext data transmission (10 char)
- 804: Plaintext merchant ID (5 char)
- 805: Message type (2 char)
- 806: Message template (4 char) (n!) (es 5! = 120, 6! = 720, 7! = 5040)
- 807: Merchant ID (5 char)
- 808: Product ID (2 char)
- 809: Quantity (3 char)
- 810: Transaction ID (12 char)
- 811: Ticket code (12 char)
- 812: Outcome (2 char)
Number of characters used: 77

### Received message management template

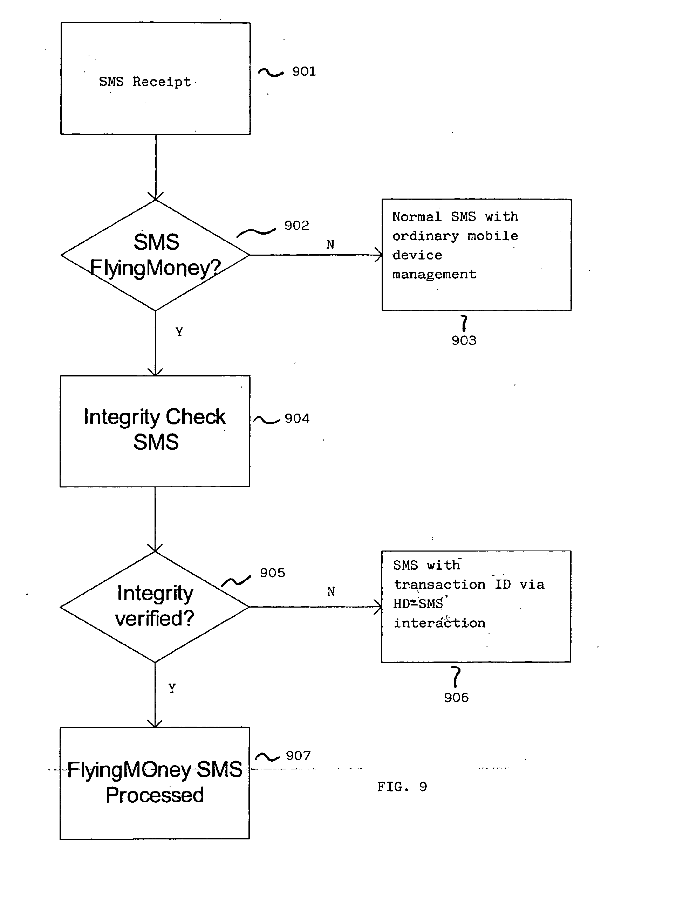

The information contained in a message as set out above, comprises the elements that allow the system NPG Engine application to correctly recognise and process the received SMS message. Fig. 9 is a flow chart illustrating how said SMS is managed by said NPG Engine (i.e. the component of the program loaded onto the mobile device AU).

Box 901 contains information relating to an SMS receipt event on a user's mobile device AU. A check is then carried out to ascertain if the SMS is a FlyingMoney SMS, as shown in test box 902. If the answer is no, branch N leads onto box 903, which illustrates the standard and ordinary management of an SMS in the mobile device. If the answer is yes, branch Y in test box 902 leads to an SMS integrity check, as shown in box 904. Box 905 envisages a further test to verify the integrity of the SMS. If the answer is no, branch N leads onto box 906, containing the SMS with the transaction ID relating to HD interaction. If the answer is yes, the received SMS is processed.

### NPG application and data backup

One aspect of one embodiment envisages the backup of the application and content of the user's mobile device AU,

Indeed, in the event of a change of device, the user will have a function in the NPG application to backup the data in the centre. This action is only repeatable if preceded by a non-repeatable action that disables device functions.

The user will receive a reset code (OTP) to be entered in the NPG application menu of the new device to reset the data,

Purchase cycle and payment flow: in the event use of the embodiments according to this invention. These examples are provided by way of example and are not therefore exhaustive.

### Fixed payments

Fixed payments are payments that take place via the Merchant application, which defines the following via a catalogue detail:
1. The type, model, etc.
2. The price
3. The information that must be downloaded onto the Merchant's device at the time of purchase.
4. Details of any loyalty component (points or cashback, which are uploaded onto the user's account)
5. A range of items listed in the Merchant's catalogue, having the features as set out in the above points.

### Examples:

a) If the RCS application is present, it will contain the entire editor's catalogue. If the user wishes to purchase the *"*// *Corriere della Sera"* newspaper, he/she selects it and when he/she is in the newsagents shop he/she brings it close up to the device in the shop, which: will confirm to the newsagent that he/she has paid and will transfer the corresponding amount to the newsagents "account". The application could envisage that a user purchasing the *"Corriere"* newspaper on a specific day receive a free *"Gazzetta"* newspaper or that it costs more on a Saturday on account of the supplement:
b) In contexts where the purchase is often a multiple purchase by definition, such as bars (e.g. Motorway Services Restaurants, McDonalds, etc.), a user may select a "pre-priced" menu (croissants, coffee and fresh fruit juice) or a menu of his/her choice on his/her telephone. In this event, after selecting the menu, when the user brings his/her telephone up close to the merchant device, the device will collect all the information to prepare a receipt and the customer's money will be deposited on his/her account. If used frequently, the option of storing a user's preferred menu is very useful.
c) The product bundle to be purchased could also comprise items listed in the catalogues of different Merchants. For example, it must be possible to select newspapers and/or magazines issued by different editors when we go to purchase them at the newsagents. In this event, it is also possible to purchase pre-defined lists.
d) A User may pre-purchase product "bundles" from a merchant through specific promotions. Example: 10 newspapers for the price of 9. In this case the user has already purchased the product and when he/she pays at the newsagents, the price paid to the newsagent will be the list price. However on the user's telephone (the user has paid for 10 newspapers), one of the newspapers in the product bundle will be "cancelled". This applies for all Merchants who wish to offer these promotions. It is important that the Merchant is the one advertising the promotion and is the owner of the network (e.g. McDonalds) as well as a Merchant who distributes its own goods through an independent network of shops (such as the newsagents):
e) If the Merchant application contains Coupons which, in line with defined rules, can be used when paying for the product (or product bundle) in question, these coupons must be used by default. In this case the Coupon will be transferred to the "end" Merchant alongside the money. The money will be reclaimed from the network. The amount due in respect of Coupon acceptance will be agreed with the corresponding Merchant, if a different legal entity.

It must in all cases be envisaged that part or all or the product price be paid in coupons (such as: meal vouchers, product discount, gift vouchers, etc.).

### Final balance payments

Final balance payments are payments of goods and services that cannot have a set amount. This type of payment primarily relates to payments for time-based car parking. In this case, the following must be envisaged:
1. A sticker to be applied to the car windshield. Said sticker will contain an NFC tag, which will be used to carry out checks;
2. A sticker (or another device) for each parking area, which will allow merchant description and parking area data (e.g. minimum cost per minute or per hour) to be downloaded

When the user parks, he/she will launch the application for that car park, will bring his/her telephone up close to the parking sticker to collate the information, and will launch his/her time. The application will, at the same time, transmit to the centre confirmation of the launch of the final balance payment transaction. If the balance of the account should fall below a specific pre-set limit (e.g. 30 minutes), the device will alert the user by means of an alarm. The device will in any case refund to the user any time that he/she may park without incurring a fine, in relation to the tariff applicable to the parking area and to the balance of his/her account.

It is very useful for the telephone to have a function that alerts the user when his/her available balance falls below a limit that allows him/her to park the car for a specific period of time (e.g. 20 minutes). In this case the user has time to return to the car avoid the fine.

On the user's return to the parking area, he/she will bring his/her telephone up to the sticker and the application, recognising the type of service, will block payment, returning the balance paid to the user.

Car park attendants will have telephones that are able to read a car's sticker. Thereafter the car parking attendant's telephone will identify whether the car is paying for parking. If the car parking attendant ascertains that the user is not paying (because the payment has not been activated or because the user has no credit left), he will issue a fine.

### Purchase and use of tickets/vouchers (travel tickets, coupons, meal vouchers and redemption codes).

A ticket or voucher is an item that is described in details in the Merchant catalogue. Unless otherwise specified, each ticket or voucher will have a financial value. Tickets and vouchers having no combined financial value, but which give users the right to make "free" transactions, may also be envisaged, such as entry fees for: events (exhibitions, cinema, theatre, private parties, sports events, and so forth), VIP areas (private lounges in airports, train stations, and so forth), preferential entry, and so forth.

Each ticker or voucher can be: purchased (via remote payment), received free of charge by coming close to dedicated stickers (such as for example the main entrance of supermarkets, shopping centres, outlets and so forth), received as vested rights (meal vouchers, fuel vouchers and so forth) or received as customers of companies/entities offering promotions.

Tickets/vouchers can be used in the following ways:
1. Purchased tickets/vouchers (e.g. public transport tickets, newspaper items - daily papers, weekly papers and other items). Pre-purchased tickets/vouchers that are present in a user's telephone will be selected and cancelled/franked by the methods as envisaged by the operator (such as for example by placing the telephone close to a sticker on means of public transport or at a retailer', such as a newsagents., in entrance turnstiles, etc.) Only a ticket/voucher that is franked with a timestamp may be deemed valid. In the event of inspection, the inspector may, by placing his/her telephone next to the passenger's telephone, launch an automatic and immediate inspection.
   Tickets/vouchers for use on public transport could, once franked, be subject to different rules;
   o They could be used for a single journey;
   o They could be used for a certain period of time on a single category of transport or on multiple categories (e.g. bus and subway).
   ∘ Where the travel ticket/voucher corresponds to a specific route and specifies the departure and arrival station, it must be franked on departure but must also contain data relating to the arrival station. This can take place because the user:
      ▪ Has purchased multiple tickets for the same route (e.g. for commuter transport)
      ▪ Has purchased a ticket having obtained the data in the Merchant catalogue In the event in which said ticket/voucher is used for "quick payment" at a retailer's premises (e.g. at a newsagents), the retailer must have a suitable device to record that the Customer has downloaded the ticket/voucher and that said ticket/voucher give the Customer the right to purchase a specific product (e.g. a newspaper). Depending on the product category, the retailer may or may not be required to issue a till receipt:
   In such cases, tickets/vouchers can be:
   ∘ Purchased as "bundles" but used individually: such as a book of tickets at reduced price, a specific number of breakfasts (cappuccino and croissant), etc.
   ∘ Purchased individually (as a total pre-paid amount) and be used to purchase "good bundles" at a special price, such as a McDonalds or Motorway Services Restaurant "menu;
2. Free tickets/vouchers. These comprise:
   ∘ Tickets/vouchers that have a value. In this scenario they can be used to pay for the goods envisaged by the ticket/voucher, in combination with the payment of cash, both via the user's telephone and via existing payment methods (cash or card);
   ∘ Tickets/voucher that have no value but grant privileged access. In this scenario they can be selected and used to grant the user the associated benefits - such as access to an airport lounge. In this scenario the could be valid for a specific period of time (e.g. one year) or numbered and used from time to time until depletion.
3. Tickets/vouchers with a value that are acquired by right. The main example of this type of voucher/ticket is the automatic purchase of meal vouchers granted by the company for which an employee works. In this scenario they will be automatically "loaded" onto the user's telephone. They will then be used to make full or partial payment for meals on the premises of approved retailers. Approved retailers must have devices that allows them to:
   o Cancel the ticket/voucher on the user's telephone;
   o Download the data corresponding to the ticket/voucher to transmit a record - electronically - to the issuing company in order that it may be reimbursed by the envisaged method and within the envisaged timeframe.
Transfer of funds between users (parents to children, advance payment of expenses to the domestic assistant, etc.)

This function will only be permitted for small amounts (limits defined by money-laundering laws). Two types of transaction are possible:
1. Basic transfer from one telephone account to another telephone/account. This function has already been implemented (particularly in under-developed countries such as Kenya). In developed countries this could be a practical solution for quick transfers between distant people (e.g. parents-children or domestic assistants). If a child (or a domestic assistant who needs to do the shopping) has run out of money or has to make a purchase but has insufficient funds, it must be envisaged that:
   a. the recipient transmits a request to the sender, specifying the amount and (opt.) the reason;
   b. The sender will be able to immediately approve or refuse said transfer and complete the transaction.
2. Periodic transfer between sender and recipient. In this scenario the sender must be able to arrange for a transfer to be executed to one or more recipients on an automatic basis, at set intervals. Example: pocket money for children.
3. Transfer reason. A sender who wishes to/must occasionally transfer money to a recipient. This case also covers donations to associations (e.g. Non-profit organisations), both generic voluntary donations and donations for natural disasters.

### Loyalty (points or cashback)

All Loyalty Cards will be encoded so that they may be stored in a telephone. Examples are:
1. Points. Instead of stamping and giving a Card to the customer, the Retailer (e.g. MediaWorld) will issue the Customer with a Card, in the format envisaged by the system. This card must have at least two standards: barcode type and NFC recognition. The possibility of reading a magnetic strip is excluded. Points will be accumulated both on the telephone and at the Retailer centre. When the Customer wishes to use his/her points he/she will use the telephone to select the item and the points will be deducted;
2. CashBack. This is possibly the most interesting scenario. In this scenario, instead of giving points the Retailer will give the customer a percentage amount of the value of the purchases made. This amount will be added to the Customer's telephone account and can also be spent when making purchased from other Merchants.

The following possibilities must be envisaged for both systems:
a) That multiple virtual cards - also known as a cluster of cards - (both points cards and cashback cards) refer to a single points accumulation account;
b) That a card (or a cluster of cards) be valid for use at a group of different Merchants, e.g. "Nectar", "You & Eni" cards, etc.

### Retailer hardware devices

### Different types of devices, to envisage:

The types of device that incorporate stickers can be developed ad hoc or be integrated into existing devices such as bank POS.

The types will be as follows:
1. "Stupid" devices (not connected to the general system):
   a. Devices having a memory, able to:
      i. Download the Merchant application;
      ii. Download the Merchant catalogue;
      iii. Activate a telephone action;
   b. Devices having no memory, able to:
      i. Activate a telephone action (typical example: cancelling (franking) a Ticker or Voucher;
      ii. Activating an action on a device it is connected to, such as opening a passage (turnstile, sliding doors, etc.)
2. "Intelligent" devices (connected to the system):
   a. Reader enabled to collect payment via a ticket/voucher on the telephone. In this case the device must:
      i. Communicate with the telephone;
      ii. Cancel the ticket/voucher selected by the user;
      iii. Provide proof to the Merchant that he/she has purchased a value corresponding to a pre-defined product, which the Merchant can/must deliver to the User;
      iv. Communicate the data relating to the cancelled ticket/voucher to the system (via SMS) so that the Merchant's account is receives a corresponding credit;
   b. Reader enabled to collect payment (even partial) via a ticket/voucher on the telephone, which partially copies the cost of purchased goods (coupons, meal vouchers and so forth). In this case the reader must be integrated with the Merchant's payment system (particularly in the case of supermarkets, as the provisions of the previous point may apply for independent retailers) and must execute the following:
      i. Communicate with the telephone;
      ii. Cancel the ticket/voucher selected by the user;
      iii. Transmit to the Merchant payment system that the User has made partial coupon payment for the goods purchased by the User;
      iv. Communicate the data relating to the cancelled ticket/voucher to the system (via SMS) so that the Merchant's account receives a corresponding credit;

Alternatively, said action can be made by the Merchant payment systems, which can be connected with the centre of the system.

### User and merchant "package" content.

The user will be provided with: nfc card, nfc tag, sticker and nfc tag for the resetting and or transfer of the application and data.

The Merchant will be provided with: a payment acceptance device, nfc card and nfs tag for the resetting and/or transfer of the application and data.

## Claims

1. Method for obtaining and/or using goods and/or services in controlled way in a system comprising a plurality of electronic user apparatuses and at least a group of electronic service apparatuses and a management computer;
- wherein each of said electronic user apparatus (AU) comprises first memory means configured to store at least a series of credit codes (CC) corresponding to credits for obtaining and/or using goods and/or services and a corresponding series of usage codes (CU) corresponding to use of said credits, second memory means that stores a program adapted to manage said credit codes (CC) and usage codes (CU), a processor connected to said first and second memory means and adapted to execute said program, a data communication device for NFC-type communications, connected to said first and second memory means and to said processor,
- wherein each of said electronic service apparatuses is an NFC tag and comprises memory means configured to store at least one good and/or service code and a data communication device for NFC-type communications connected to said memory means,
- wherein management computer (EG) comprises communication means adapted to communicate via a public communication network (NW), in particular Internet, first memory means configured to store at least a series of credit codes (CC) corresponding to credits for obtaining and/or using goods and/or services and a corresponding series of usage codes (CU) corresponding to the use of said credits and a corresponding series of check indicators, second memory means that stores a program adapted to manage said credit codes and usage codes, a processor connected to said communication means and said first and second memory means and adapted to execute said program,
- wherein there is provided that, as a result of purchase, in particular via Internet, or due to gift or due to voucher of goods and/or services, an electronic user apparatus (AU) receives one or more credit codes corresponding to said purchased or gifted or vouchered goods and/or services via a public communications network, and stores said one or more credit codes internally to said electronic user apparatus,
- wherein there is provided that said electronic user apparatus (AU) be placed in proximity of said electronic service apparatus so that an NFC-type communication may be established ;
wherein said electronic user apparatus (AU) carry out the following stages:
A) receive a good and/or service code from said electronic service apparatus,
B) associate said received good and/or service code with a credit code (CC) stored,
C) generate a usage code (CU) corresponding to said associated credit code,
D) store said usage code generated;
so that said associated credit code (CC) is marked as used, and
wherein said receipt of one or more credit codes can occur before said stage A or during said stage B if the association fails;
the method **characterized by** the fact of providing further that:
P) said electronic user apparatus (AU) transmits said credit code (CC) and said corresponding usage code (CU) to said management computer (EG), and waits,
Q) said management computer (EG) carries out a first check if said credit code (CC) is associated to said electronic user apparatus (AU) and available, and a second check if said usage code (CU) is correct,
R) said management computer (EG) generates and transmits a check indicator (IC) to said electronic user apparatus as a function of said first check and said second check, and said electronic user apparatus (AU) receives said check indicator (IC).

2. Method according to claim 1 wherein said received good and/or service code contains an identifier that specifies who is providing the goods or service.

3. System for obtaining and/or using of goods and/or services in controlled way, comprising :
- a plurality of electronic user apparatuses (AU),
- at least a group of electronic service apparatus (AS),
- a management computer (EG);
wherein the plurality of electronic user apparatuses (AU) and the group of electronic service apparatuses (AS) and the management computer (EG), in combination, are arranged to carry out the method for obtaining and/or using of goods and/or services in controlled way according to claim 1 or 2.

## Patentansprüche

1. Verfahren, um in einem System, das mehrere elektronische Nutzervorrichtungen und wenigstens eine Gruppe elektronischer Dienstleistungsvorrichtungen und einen Managementcomputer umfasst, Waren und/oder Dienstleistungen auf gesteuerte Weise zu erhalten und/oder verwenden;
- wobei jede der genannten elektronischen Nutzervorrichtungen (AU) ein erstes Speichermittel, das dafür konfiguriert ist, wenigstens eine Reihe von Kreditcodes (CC), die Krediten zum Erhalten und/oder Verwenden von Waren und/oder Dienstleistungen entsprechen, und eine entsprechende Reihe von Nutzungscodes (CU), die der Verwendung der genannten Kredite entsprechen, zu speichern, ein zweites Speichermittel, das ein Programm speichert, das dafür ausgelegt ist, die genannten Kreditcodes (CC) und Nutzungscodes (CU) zu managen, einen Prozessor, der mit dem genannten ersten und zweiten Speichermittel verbunden ist und der dafür ausgelegt ist, das genannte Programm auszuführen, eine Datenkommunikationsvorrichtung für Kommunikationen vom NFC-Typ, die mit dem genannten ersten und zweiten Speichermittel und mit dem genannten Prozessor verbunden ist, umfasst,
- wobei jede der genannten elektronischen Dienstleistungsvorrichtungen ein NFC-Etikett ist und ein Speichermittel, das dafür konfiguriert ist, wenigstens einen Waren- und/oder Dienstleistungscode zu speichern, und eine Datenkommunikationsvorrichtung für Kommunikationen vom NFC-Typ, die mit dem genannten Speichermittel verbunden ist, umfasst,
- wobei der Managementcomputer (EG) ein Kommunikationsmittel umfasst, das dafür ausgelegt ist, über ein öffentliches Kommunikationsnetz (NW), insbesondere über das Internet, zu kommunizieren, wobei das erste Speichermittel dafür konfiguriert ist, wenigstens eine Reihe von Kreditcodes (CC), die Krediten zum Erhalten und/oder Verwenden von Waren und/oder Dienstleistungen entsprechen, und eine entsprechende Reihe von Nutzungscodes (CU), die der Verwendung der genannten Kredite entsprechen, und eine entsprechende Reihe von Prüfindikatoren zu speichern, wobei das zweite Speichermittel, das ein Programm speichert, dafür ausgelegt ist, die genannten Kreditcodes und Nutzungscodes zu managen, wobei mit dem genannten Kommunikationsmittel und ersten und zweiten Speichermittel ein Prozessor verbunden ist, der dafür ausgelegt ist, das genannte Programm auszuführen,
- wobei vorgesehen ist, dass im Ergebnis eines Kaufs, insbesondere über das Internet, oder wegen eines Geschenks oder wegen eines Gutscheins für Waren und/oder Dienstleistungen eine elektronische Nutzervorrichtung (AU) einen oder mehrere Kreditcodes, die den genannten geschenkten Waren und/oder Dienstleistungen oder Waren und/oder Dienstleistungen, über die ein Gutschein ausgestellt wurde, entsprechen, über ein öffentliches Kommunikationsnetz empfängt und die genannten einen oder mehreren Kreditcodes intern in der genannten elektronischen Nutzervorrichtung speichert,
- wobei vorgesehen ist, dass die genannte elektronische Nutzervorrichtung (AU) in der Weise in der Nähe der genannten elektronischen Dienstleistungsvorrichtung angeordnet ist, dass eine Kommunikation vom NFC-Typ aufgebaut werden kann;
wobei die genannte elektronische Nutzervorrichtung (AU) die folgenden Schritte ausführt:
A) Empfangen eines Waren- und/oder Dienstleistungscodes von der genannten elektronischen Dienstleistungsvorrichtung,
B) Zuordnen des genannten empfangenen Waren- und/oder Dienstleistungscodes zu einem gespeicherten Kreditcode (CC)
C) Erzeugen eines Nutzungscodes (CU), der dem genannten zugeordneten Kreditcode entspricht,
D) Speichern des genannten erzeugten Nutzungscodes;
sodass der genannte zugeordnete Kreditcode (CC) als verwendet gekennzeichnet wird, und
wobei der genannte Empfang des einen oder der mehreren Kreditcodes vor der genannten Phase A oder während der genannten Phase B stattfinden kann, falls die Zuordnung fehlschlägt;
wobei das Verfahren **dadurch gekennzeichnet ist, dass** es ferner vorsieht, dass:
P) die genannte elektronische Nutzervorrichtung (AU) den genannten Kreditcode (CC) und den genannten entsprechenden Nutzungscode (CU) an den genannten Managementcomputer (EG) sendet und wartet,
Q) der genannte Managementcomputer (EG) eine erste Prüfung, ob der genannte Kreditcode (CC) der genannten elektronischen Nutzervorrichtung (AU) zugeordnet ist und verfügbar ist, und eine zweite Prüfung, ob der genannte Nutzungscode (CU) richtig ist, ausführt,
R) der genannte Managementcomputer (EG) in Abhängigkeit von der genannten ersten Prüfung und von der genannten zweiten Prüfung einen Prüfindikator (IC) erzeugt und an die genannte elektronische Nutzervorrichtung sendet und wobei die genannte elektronische Nutzervorrichtung (AU) den genannten Prüfindikator (IC) empfängt.

2. Verfahren gemäß Anspruch 1, wobei der genannte empfangene Waren- und/oder Dienstleistungscode eine Kennung enthält, die spezifiziert, wer die Waren oder die Dienstleistung liefert.

3. System, um Waren und/oder Dienstleistungen auf gesteuerte Weise zu erhalten und/oder zu verwenden, wobei das System umfasst:
- mehrere elektronische Nutzervorrichtungen (AU),
- wenigstens eine Gruppe elektronischer Dienstleistungsvorrichtungen (AS),
- einen Managementcomputer (EG);
wobei die mehreren elektronischen Nutzervorrichtungen (AU) und die Gruppe elektronischer Dienstleistungsvorrichtungen (AS) und der Managementcomputer (EG) zusammen dafür ausgelegt sind, das Verfahren, um Waren und/oder Dienstleistungen auf gesteuerte Weise zu erhalten und/oder zu verwenden, gemäß Anspruch 1 oder 2 auszuführen.

## Revendications

1. Procédé pour l'obtention et/ou l'utilisation de produits et/ou de services d'une manière contrôlée dans un système comprenant une pluralité d'appareils utilisateurs électroniques et au moins un groupe d'appareils de services électroniques et un ordinateur de gestion ;
- dans lequel chacun desdits appareils utilisateurs électroniques (AU) comprend des premiers moyens de mémoire configurés pour stocker au moins une série de codes de crédit (CC) correspondant à des crédits pour obtenir et/ou utiliser des produits et/ou services et une série correspondante de codes d'utilisation (CU) correspondant à une utilisation desdits crédits, des deuxièmes moyens de mémoire qui stockent un programme adapté pour gérer lesdits codes de crédit (CC) et codes d'utilisation (CU), un processeur connecté aux dits premiers et deuxièmes moyens de mémoire et adapté pour exécuter ledit programme, un dispositif de communication de données pour des communications de type NFC, connecté aux dits premiers et deuxièmes moyens de mémoire et au dit processeur,
- dans lequel chacun desdits appareils de services électroniques est une étiquette NFC et comprend des moyens de mémoire configurés pour stocker au moins un code de produit et/ou de service et un dispositif de communication de données pour des communications de type NFC connecté aux dits moyens de mémoire,
- dans lequel l'ordinateur de gestion (EG) comprend des moyens de communication adaptés pour communiquer via un réseau de communication public (NW), en particulier Internet, des premiers moyens de mémoire configurés pour stocker au moins une série de codes de crédit (CC) correspondant à des crédits pour obtenir et/ou utiliser des produits et/ou services et une série correspondante de codes d'utilisation (CU) correspondant à l'utilisation desdits crédits et une série correspondante d'indicateurs de contrôle, des deuxièmes moyens de mémoire qui stockent un programme adapté pour gérer lesdits codes de crédit et codes d'utilisation, un processeur connecté aux dits moyens de communication et aux dits premiers et deuxièmes moyens de mémoire et adapté pour exécuter ledit programme,
- dans lequel il est fait en sorte que, à la suite d'un achat, en particulier via Internet, ou en raison d'un cadeau ou en raison d'un bon de produits et/ou services, un appareil utilisateur électronique (AU) reçoive un ou plusieurs codes de crédit correspondant aux dits produits et/ou services achetés ou offerts ou obtenus par bon via un réseau de communication public, et stocke lesdits un ou plusieurs codes de crédit à l'intérieur dudit appareil utilisateur électronique,
- dans lequel il est fait en sorte que ledit appareil utilisateur électronique (AU) soit placé à proximité dudit appareil de service électronique de manière qu'une communication de type NFC puisse être établie ;
dans lequel ledit appareil utilisateur électronique (AU) exécute les étapes suivantes :
A) la réception d'un code de produit et/ou service à partir dudit appareil de service électronique,
B) l'association dudit code de produit et/ou service à un code de crédit (CC) stocké,
c) la génération d'un code d'utilisation (CU) correspondant au dit code de crédit associé,
D) le stockage dudit code d'utilisation généré ;
de manière que ledit code de crédit associé (CC) soit marqué comme utilisé, et
dans lequel ladite réception d'un ou plusieurs codes de crédit peut se produire avant ladite étape A ou durant ladite étape B si l'association échoue ;
le procédé étant **caractérisé par le fait qu'**il est en outre fait en sorte que :
P) ledit appareil utilisateur électronique (AU) transmette ledit code de crédit (CC) et ledit code d'utilisation correspondant (CU) au dit ordinateur de gestion (EG) et attende,
Q) ledit ordinateur de gestion (EG) exécute un premier contrôle du fait que ledit code de crédit (CC) soit associé au dit appareil utilisateur électronique (AU) et disponible, et un deuxième contrôle du fait que ledit code d'utilisation (CU) soit correct,
R) ledit ordinateur de gestion (EG) génère et transmette un indicateur de contrôle (IC) au dit appareil utilisateur électronique en fonction dudit premier contrôle et dudit deuxième contrôle et ledit appareil utilisateur électronique (AU) reçoive ledit indicateur de contrôle (IC).

2. Procédé selon la revendication 1, dans lequel ledit code de produit et/ou service reçu contient un identificateur qui spécifie qui fournit les produits ou le service.

3. Système pour l'obtention et/ou l'utilisation de produits et/ou de services d'une manière contrôlée, comprenant :
- une pluralité d'appareils utilisateur électroniques (AU),
- au moins un groupe d'appareils de services électroniques (AS),
- un ordinateur de gestion (EG) ;
dans lequel la pluralité d'appareils utilisateurs électroniques (AU) et le groupe d'appareils de services électroniques (AS) et l'ordinateur de gestion (EG), en combinaison, sont agencés pour exécuter le procédé pour l'obtention et/ou l'utilisation de produits et/ou de services d'une manière contrôlée selon la revendication 1 ou 2.
